# EUROPEAN PATENT APPLICATION

(11) **EP 1 640 829 A2**
(43) Date of publication of application: **29.03.2006**
(21) Application number: 05255885.5
(22) Date of filing: 22.09.2005
(51) Int. Cl.: G05B 19/05

(54) **Programmable controller**

(30) Priority: 27.09.2004 JP 2004279682
(71) Applicant: FANUC LTD, Minamitsuru-gun, Yamanashi 401-0597 (JP)
(72) Inventor: Nagashima, Noritake Fanuc Manshonharimomi, Minamitsuru-gun Yamanashi 401-0511 (JP); Hasegawa, Satoshi Fanuc Manshonharimomi, Minamitsuru-gun Yamanashi 401-0511 (JP)
(74) Representative: Billington, Lawrence Emlyn

(57) **Abstract**

A programmable controller that facilitates investigation when a sequence program is investigated. When the ladder diagram of the sequence program is displayed, the ladder diagrams of main programs and the executed subprogram are displayed with normal brilliance. The ladder diagrams of unexecuted subprograms are displayed with low brilliance. Therefore, when the ladder diagrams are displayed, it is possible to easily recognize whether the subprograms have been executed or not, which facilitates the investigation of the sequence program.

## Description

### BACKGROUND OF THE INVENTION

### 1. Field of the Invention

The present invention relates to a programmable controller that performs sequence control of various types of machines and devices.

### 2. Description of Related Art

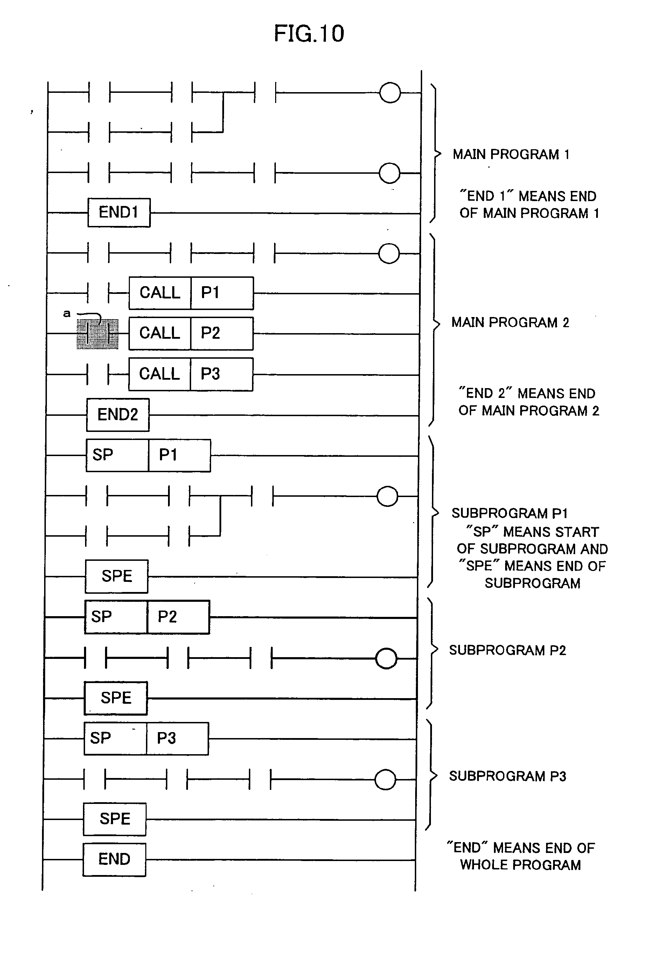

A sequence program used in a programmable controller is constructed by a ladder program shown by a ladder diagram as in FIG. 10, and formed of main programs and subprograms called by a main program. According to the example shown in FIG. 10, the sequence program is formed of main programs 1 and 2 and subprograms P1, P2 and P3 . An "END 1" command means the end of the main program 1. The process up to the "END 1" command is the main program 1, and the process after the "END 1" command up to an "END 2" command is the main program 2. The "END 2" command denotes the end of the main program 2. A "CALL" command indicates a call of a subprogram. For example, the subprogram P1 is read out and executed by "CALL P1". An "SP" command means the start of the subprogram, and an "SPE" command the end of the subprogram. Therefore, the process from the "SP" command to the "SPE" command is the subprogram designated by the "CALL" command. In addition, an "END" command indicates the end of all the programs.

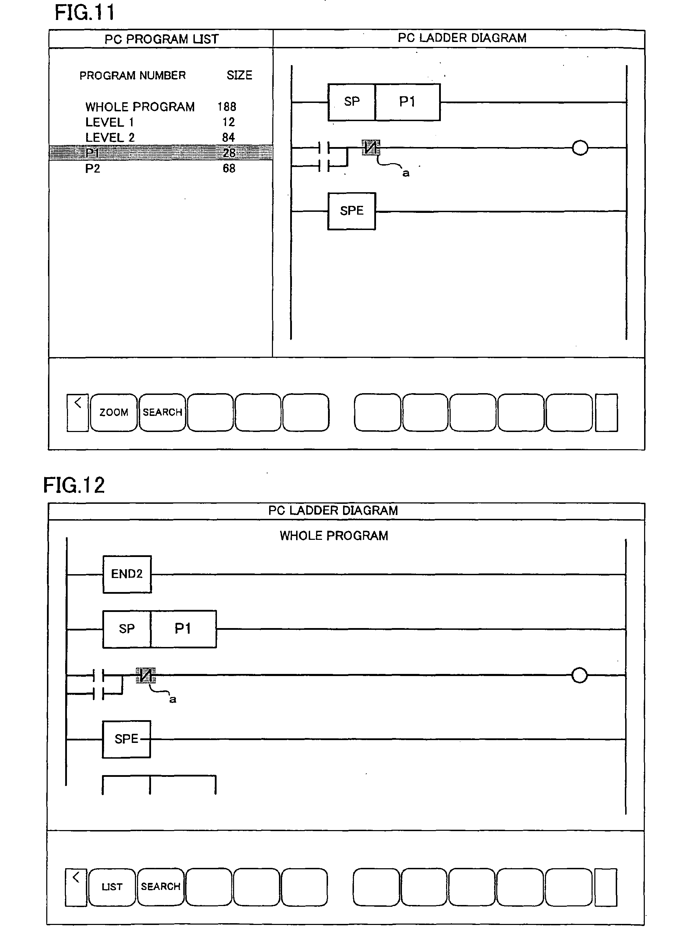

It takes time to edit a sequence program (ladder program) like the one described above, and to display the sequence program (ladder program) on the screen in the event a problem occurs in the sequence program (ladder program) and search out a target point. For this reason, according to a well-known programmable controller to which a monitor is connected, as shown in FIG. 11, a program list is displayed on the left part of the screen of the monitor, and a ladder diagram on the right part of the screen. By selecting a subprogram name from the program list displayed on the left part of the screen, the ladder diagram of the subprogram is displayed, and the ladder diagram is scrolled to find the target point (see JP 5-341815A).

As shown in FIG. 12, the ladder diagram section can be displayed in an enlarged scale over the screen. Generally, in order to check the ON/OFF state of contacts and coils in the displayed ladder diagram, a contact and a coil in the ON state are displayed with special display properties to be distinguished from others. In FIGS. 11 and 12, that a constantly-closed contact shown by reference mark a and by hatching is activated (connection is OFF) is indicated by being displayed differently from other contacts, coils, etc.

Although it is possible to designate a subprogram, display the ladder diagram thereof, and display the ON/OFF state of a signal in the ladder diagram, it is unknown whether the subprogram has actually been executed. For this reason, when a problem occurs in a subprogram, it is necessary to track back to the calling source of the subprogram in the ladder diagram, confirm that a call to the subprogram is made, and then investigate the cause of the problem within the program.

For example, in FIG. 10, in the event a problem occurs in the subprogram P2, the ladder diagram is traced to determine whether a call to the subprogram P2 is made or not, and as shown by reference mark a, it is confirmed that the contact of a net of the CALL command with respect to the subprogram P2, "CALL P2", is ON. Only after doing so, it is possible to confirm that the subprogram P2 has been called and executed.

As described, there is the problem that when a problem occurs in the sequence program, it takes time to investigate the cause of the problem.

### SUMMARY OF THE INVENTION

The present invention provides a programmable controller that facilitates an investigation of a sequence program in a case where a problem occurs in the sequence program.

According to the present invention, a programmable controller with a monitoring device for monitoring a sequence program, comprises: recording means for recording execution state of subprograms in the sequence program in execution; reading means for reading out the execution state recorded by the recording means; and display control means for displaying an executed subprogram and an unexecuted subprogram to be distinguished from each other in the sequence program on the monitoring device according to the execution state read by the reading means, to thereby facilitate an investigation of the sequence program.

The display control means may display the executed subprogram and the unexecuted subprogram to be distinguished by different display brilliances or different display colors.

Since the subprogram that has been executed and the subprogram that has not been executed are distinguished from each other on the monitoring device, the investigation of the sequence program is facilitated in a case where the sequence program has a problem in subprograms, etc.

### BRIEF DESCRIPTION OF THE DRAWINGS

FIG. 1 is a block diagram showing a substantial part of a programmable controller in one embodiment of the present invention;
FIG. 2 is a flowchart showing an execution process of a sequence program in the same embodiment;
FIG. 3 is a flowchart showing a display process of the sequence program in the same embodiment;
FIG. 4 is an explanatory view of a subprogram information table in the same embodiment;
FIG. 5 is an explanatory view of a subprogram-execution state work memory in the same embodiment;
FIG. 6 is an explanatory view of a subprogram-execution state memory in the same embodiment;
FIG. 7 shows one example of a sequence program display in the same embodiment;
FIG. 8 shows one example of an enlarged display of a ladder diagram in the same embodiment;
FIG. 9 is an explanatory view for explaining differentiation between a subprogram in an executed state and a subprogram in an unexecuted state in the ladder diagram display;
FIG. 10 shows one example of a ladder diagram;
FIG. 11 shows one example of a sequence program display in a conventional programmable controller; and
FIG. 12 shows one example of an enlarged display of a ladder diagram in a conventional programmable controller.

### DETAILED DESCRIPTION

One embodiment of a programmable controller of the present invention will be described below with reference to the drawings.

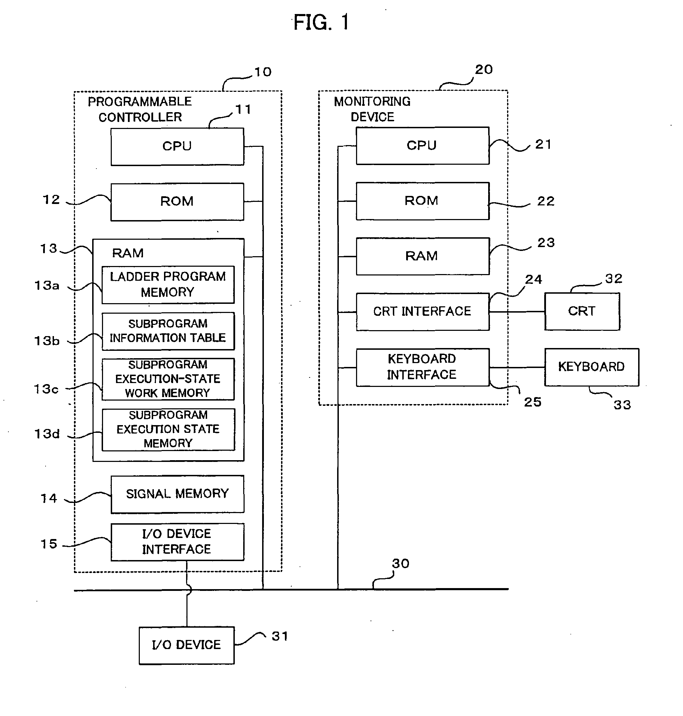

FIG. 1 is a block diagram showing a substantial part in the embodiment. A programmable controller 10 is formed of a processor 11 for controlling the entire programmable controller, a ROM 12 for storing control software that is executed by the processor 11, a RAM 13 including a ladder program memory 13a for storing a ladder program (sequence program), after-mentioned subprogram information table 13b, subprogram-execution state work memory 13c, subprogram-execution state memory 13d, etc., a signal memory 14 for storing an ON/OFF state of contacts and coils (relay), an input/output device interface 15 for connecting an external input/output device 31, and the like. They are connected to each other through a bus 30.

A monitoring device 20 is connected to the bus 30. In the monitoring device 20, a processor 21 for controlling the entire monitor, a ROM 22 for storing monitoring software, a work memory 23, an interface 24 with a CRT 32 of a display, and an interface 25 with a keyboard 33 are bus-connected to each other. As a display, liquid crystal or another display may be utilized.

The programmable controller 10 to which the monitoring device 20 is connected is virtually the same as one publicly known. The programmable controller 10, however, differs from a conventional programmable controller in that there are disposed the subprogram information table 13b, the subprogram-execution state work memory 13c and the subprogram-execution state memory 13d in the RAM 13, and that, as described below, a ladder diagram of a subprogram in the executed state is displayed differently from other ladder diagrams in terms of brilliance and the like.

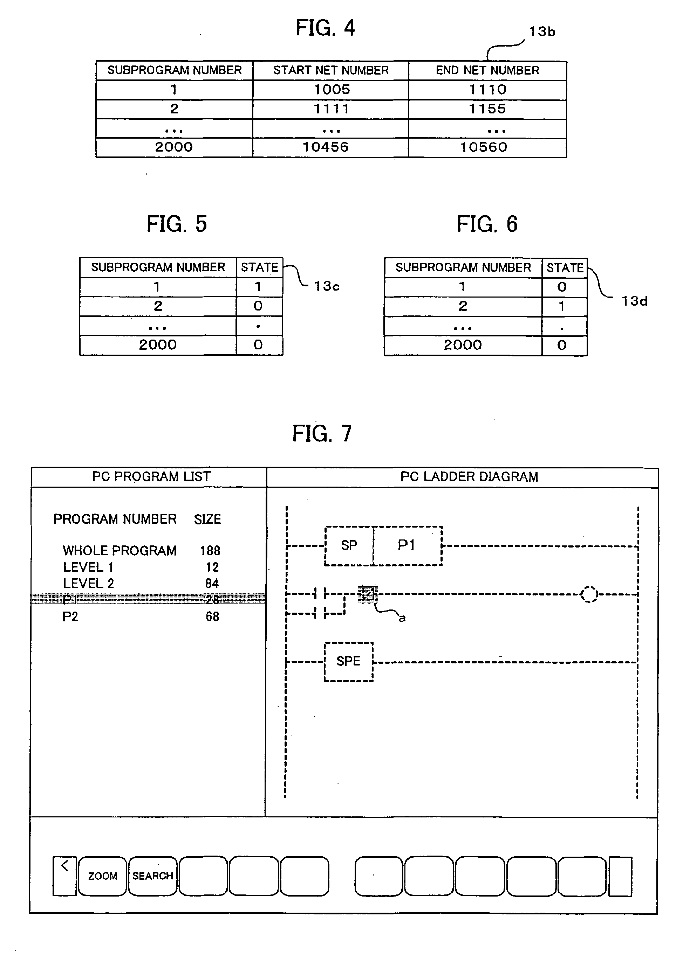

FIG. 4 is an explanatory view of the subprogram information table 13b. The subprogram information table 13b is created through a process in which after a sequence program is prepared and stored in the ladder program memory 13a; a SUBPROGRAM INFORMATION OBTENTION command is inputted to the programmable controller; and the processor 11 then analyzes the sequence program (ladder program) and writes a start net number (net number of an "SP" command) and an end net number (net number of an "SPE" command) in the subprogram information table 13b with respect to each subprogram number (subprogram name).

The subprogram-execution state work memory 13c stores information as to whether or not each subprogram has been executed in an execution cycle of the current sequence program with respect to each subprogram number (subprogram name) as shown in FIG. 5. When a subprogram has been executed, "1" is written in a bit indicative of the state.

In the subprogram-execution state memory 13d, after one execution cycle of the sequence program is ended, storage contents of state storage bits of the subprogram-execution state work memory 13c are copied, and as shown in FIG. 6, the execution state of the subprogram in the previous cycle is stored with respect to each subprogram number (subprogram name). When the ladder diagram is displayed, the ladder diagram of the subprogram is changed in display properties including display brilliance, color and the like, with reference to the subprogram-execution state memory 13d, to thereby display the ladder diagram in distinction from others.

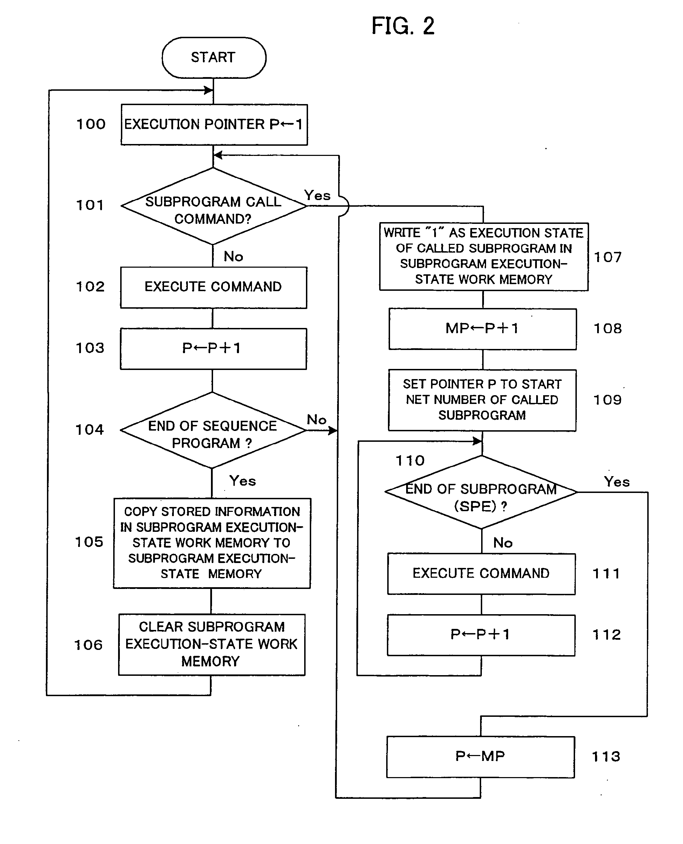

FIG. 2 is a flowchart showing a process with a central focus on part related to the present invention when the processor 11 of the programmable controller 10 executes the sequence program.

Once a START command with respect to the sequence program is inputted, an execution pointer P is first set to "1" that is an initial value (Step 100). A net under the net number indicated by the pointer P is read out from the ladder program, and a determination is made as to whether a command of the net is a CALL command of a subprogram (Step 101). If not a CALL command, the read-out command is executed (Step 102), and the pointer P is incremented by 1 (Step 103). A determination is made as to whether the command of the net indicated by the pointer P is END of the sequence program (Step 104). If the command is not END, the procedure returns to Step 101, to thereby determine whether the command is a CALL command of a subprogram as described above. Thereafter, the process from Step 101 to Step 104 is repeatedly executed until a SUBPROGRAM READ-OUT command is read out.

When Step 101 determines that the command is the SUBPROGRAM READ-OUT command, "1" is written as a state storage bit for the read-out subprogram number (subprogram name) in the subprogram-execution state work memory 13c, and the fact that the subprogram is used in this cycle is stored (Step 107). Subsequently, "1" is added to a value of the execution pointer P, and a value of the next net number in the main program is stored in a register MP (Step 108). A start net number of the number (name) of the subprogram to which the command is given is read out from the subprogram information table 13b, and the pointer P is set to the read-out start net number (Step 109). The command of the net indicated by the pointer P is executed while the pointer P is updated by "1" until the "SPE" meaning the END of the subprogram is read (Steps 110 to 112). Once the "SPE" meaning the END of the subprogram is read, the value indicative of the next net number of the main program, which has been stored in the register MP in Step 108 is set in the pointer P (Step 113), and the procedure returns to Step 101.

Thereafter, the process from Step 101 to Step 104 is executed. Every time a SUBPROGRAM CALL command is read, the process from Step 107 to Step 113 is executed, to thereby execute the sequence program.

In this manner, if Step 104 determines that the END command of the sequence program has been read, the value of the bit indicating the execution state of each subprogram in the subprogram-execution state work memory 13c (see FIG. 5) is copied and stored in the subprogram-execution state memory 13d (see FIG. 6) (Step 105). Subsequently, state storage values of the subprogram-execution state work memory 13c are cleared to "0" to prepare the storage of the subprogram used in the next cycle (Step 106), and the procedure returns to Step 100.

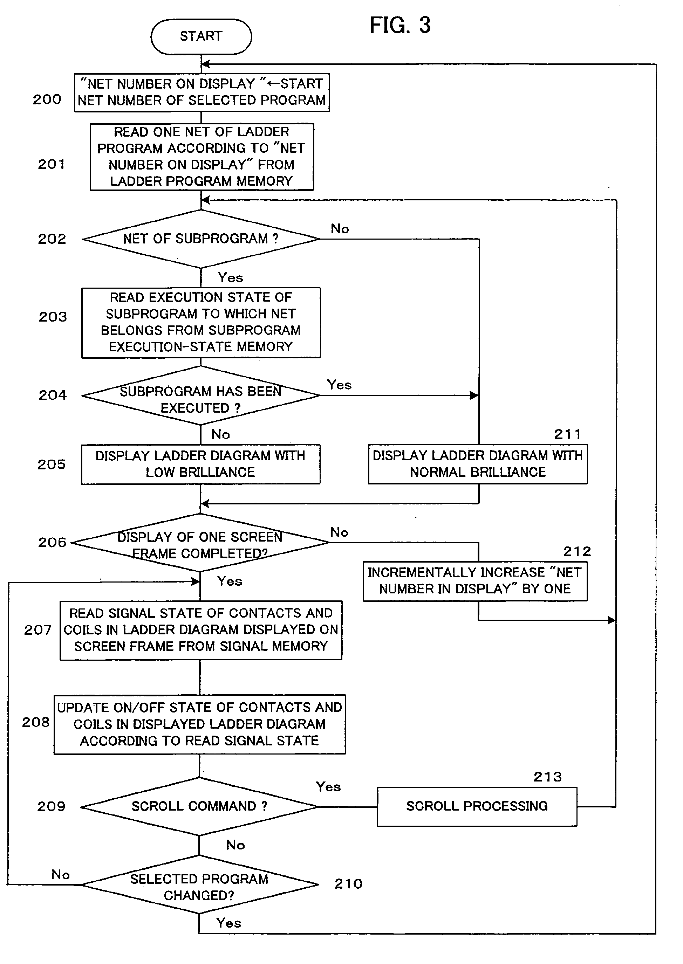

FIG. 3 is a flowchart of a display process of the sequence program carried out by the processor 21 of the monitoring device 20.

When a SEQUENCE PROGRAM DISPLAY command is inputted, a monitor screen is switched to a sequence program list display as shown in FIG. 7. The start net number of a selected program is set in a register for storing a "net number on display" (Step 200). In general, the whole program is initially selected, so that the "net number on display" is set to "1 ". If a level number of a subprogram or main program is previously selected, the start net number of the program is set. In the case of a subprogram, the start net number of the selected subprogram is read out from the subprogram information table 13b shown in FIG. 4 to be set. If the main program is divided into levels, start net numbers of the respective levels are previously set and stored. The preset start net number corresponding to a selected level number is set as the "net number on display". In an example shown in FIG. 7, the subprogram P1 is selected.

In the next place, one net of the ladder program is read out from the ladder program stored in the ladder program memory 13a of the RAM 13 according to the "net number on display" stored in the register (Step 201). A determination is made as to whether the read-out net is a subprogram or not on the basis of the net number and the subprogram information table 13b (see FIG. 4). If the "net number on display" does not exist in between the start net number and an end net number of each subprogram stored in the subprogram information table 13b, the procedure proceeds to Step 211 to display the ladder diagram of the net with normal brilliance, and then proceeds to Step 206.

If the "net number on display" is recognized as a net number in a subprogram, the state stored in the subprogram-execution state memory 13d is read out with respect to the subprogram number (name) to which the net belongs (Step 203), and a determination is made as to whether the state is "1", which means that the subprogram has been executed (Step 204). If the state is "1", and the subprogram has been executed, the ladder diagram of the net is displayed with normal brilliance (Step 211), and the procedure proceeds to Step 206. If the state is "0", and the subprogram is not in the executed state, the ladder diagram of the net is displayed with low brilliance (Step 205), and the procedure proceeds to Step 206.

In Step 206, it is determined whether or not display of one screen frame has been completed. If the display of one screen frame has not yet completed, the procedure proceeds to Step 212, and the register of the "net number on display" is incrementally increased by "1". Then the procedure returns to Step 201 and executes the above-described process.

When the display of one screen frame is completed, signal states of contacts and coils in the ladder diagram displayed on the screen frame are read out from the signal memory 14 (Step 207). According to the read signal states, an ON/OFF state of each of the contacts and coils of the displayed ladder diagram is updated (Step 208).

A determination is made as to whether or not a SCROLL command is inputted (Step 209), and whether or not the selected program is changed (Step 210). If neither of them is inputted, the procedure returns to Step 207 and repeatedly executes the process from Step 207 to Step 210.

When the SCROLL command is inputted, a scroll process is carried out. In the case of SCROLL UP, the "net number on display" is increased by 1, and the net number is taken as an additional display net number, thereby returning to Step 202. In the case of a SCROLL-DOWN command, the display is scrolled down. The "net number on display" is reduced by 1, and simultaneously a net number smaller by 1 than a minimum net number that is currently displayed is taken as an additional display net number. Then the procedure proceeds to Step 202. When the SCROLL command is inputted, the display is scrolled as described. Moreover, the ladder diagram of the subprogram in the unexecuted state is displayed with low brilliance. As to the others, the ladder diagram is drawn with normal brilliance.

In case that another program (main program, the level thereof, subprogram or the like) is selected from the program list displayed on the screen of the monitoring device 20 (Step 210), the procedure returns to Step 200, and the display of the ladder diagram is started from the start net number of the selected program as described.

FIG. 7 is an example in which the subprogram P1 is selected, and the ladder diagram thereof is displayed. In this case, since the subprogram P1 is not executed (not executed in the previous cycle), the ladder diagram corresponding to the subprogram P1 is displayed with low brilliance. FIG. 7 shows the ladder diagram by broken lines in order to express the low brilliance. Compared to a display example of the same screen in a conventional art example shown in FIG. 11, FIG. 7 showing the display according to the present embodiment is different in that the ladder diagram of the subprogram P1 is displayed with low brilliance (by broken lines).

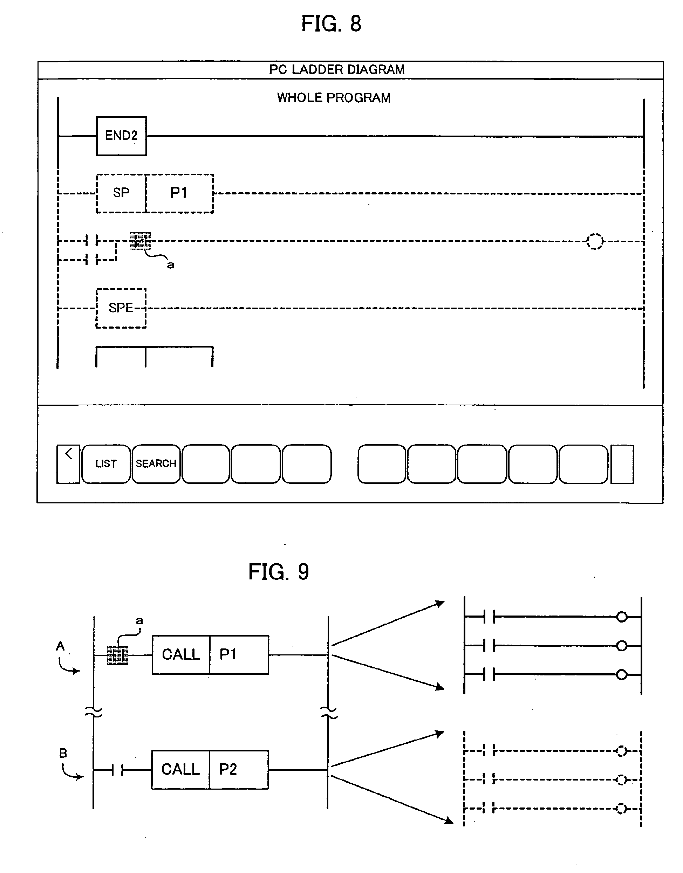

FIG. 8 is a view showing an enlarged display of the ladder diagram on the above screen. Only the subprogram P1 is displayed with low brilliance (by broken lines), and other parts with normal brilliance (by solid lines). As is apparent in comparison with FIG. 12 showing a conventional art example of the same screen as FIG. 8, although all ladder diagrams are displayed with the same brilliance (by solid lines) in the conventional art example shown in FIG. 12, only the subprogram P1 that is not executed is displayed with low brilliance (by broken lines) in FIG. 8.

In other words, as shown by an arrow A in FIG. 9, if the subprogram P1 is executed, the ladder diagram of the subprogram is displayed with normal brilliance. As shown by an arrow B in FIG. 9, the ladder diagram of the unexecuted subprogram P2 is displayed with low brilliance (by broken lines). In FIG. 10, the subprogram P2 is executed, and only the ladder diagram of the subprogram P2 is shown by heavy lines so as to be distinguished from the other subprograms in the unexecuted state.

In FIGS. 7, 8 and 9, reference mark a denotes a contact in operation as in FIGS. 11 and 12.

Although in the above embodiment, the subprogram in the executed state and that in the unexecuted state can be distinguished from each other by differentiating brilliance of the displayed ladder diagrams, the subprograms may be distinguished from each other by display colors instead of brilliance. Alternatively, it is also possible to differentiate a background color with respect to the unexecuted subprogram. In short, in the ladder diagram of the executed subprogram and that of the unexecuted subprogram, display forms may be differentiated so that execution/non-execution may be distinguished from each other.

## Claims

1. A programmable controller with a monitoring device for monitoring a sequence program, comprising:
recording means for recording execution state of subprograms in the sequence program in execution;
reading means for reading out the execution state recorded by said recording means; and
display control means for displaying an executed subprogram and an unexecuted subprogram to be distinguished from each other in the sequence program on the monitoring device according to the execution state read by said reading means.

2. A programmable controller according to claim 1, wherein said display control means displays the executed subprogram and the unexecuted subprogram to be distinguished by different display brilliances.

3. A programmable controller according to claim 1, wherein said display control means displays the executed subprogram and the unexecuted subprogram to be distinguished by different display colors.
